# FASCICULE DE BREVET EUROPEEN

(11) **EP 1 066 939 B1**
(45) Date de publication et mention de la délivrance du brevet: **29.09.2004**
(21) Numéro de dépôt: 00420146.3
(22) Date de dépôt: 03.07.2000
(51) Int. Cl.: B29B 9/06, B29B 9/14, B29C 47/00

(54) **Procédé et installation de traitement de fibres destinées à la fabrication de matériaux composites comme béton et bitume, et matériau composite ainsi obtenus**
Verfahren zur Behandlung von Fasern zum Herstellung von Verbundwerkstoffen wie Asphalt und Beton, und dadurch Hergestellte Verbundwerkstoffe
Proces for treating fibers for use in composite materials like asphalt and concrete, and composite material thus obtained

(30) Priorité: 01.07.1999 FR 9908743
(43) Date de publication de la demande: 10.01.2001
(73) Titulaire: Mixt Composites Recyclables, 07300 Tournon sur Rhône (FR)
(72) Inventeur: Marion, Alain, 26320 Saint Marcel les Valence (FR); Lambert, Stéphane, 07370 Sarras (FR)
(74) Mandataire: Myon, Gérard Jean-Pierre

(56) Documents cités:
- EP-A- 0 610 619
- US-A- 3 577 494
- US-A- 3 712 776
- US-A- 4 244 903
- US-A- 5 028 266
- US-A- 5 879 601
- PATENT ABSTRACTS OF JAPAN vol. 012, no. 229 (M-714), 29 juin 1988 (1988-06-29) & JP 63 027207 A (KAWASAKI STEEL CORP), 4 février 1988 (1988-02-04)
- PATENT ABSTRACTS OF JAPAN vol. 1998, no. 06, 30 avril 1998 (1998-04-30) & JP 10 053451 A (SEKISUI CHEM CO LTD;U G KIZAI KK), 24 février 1998 (1998-02-24)
- DATABASE WPI Section Ch, Week 199616 Derwent Publications Ltd., London, GB; Class A26, AN 1996-157342 XP002148819 & JP 08 041442 A (WATANABE S), 13 février 1996 (1996-02-13)

## Description

La présente invention concerne un procédé et une installation de traitement de fibres destinées à la fabrication de matériaux composites, pour en assurer la manipulation et le dosage.

L'invention vise plus particulièrement les fibres de verre, mais elle concerne également tout autre type de fibres, par exemple de carbone, d'aramide ou bien encore les fibres d'origine végétale.

Les utilisations de ces fibres sont multiples. Elles sont par exemple incorporées directement dans une matrice contenant une résine thermoplastique, de manière à former des granulés composites.

Sous l'angle pratique, l'opérateur dispose de fibres assemblées sous forme d'un agglomérat qu'il incorpore directement dans le matériau destiné à recevoir ces fibres.

L'utilisation d'un tel agglomérat présente certains inconvénients, car il se révèle difficile à manipuler et à doser. De la sorte, le matériau composite, une fois formé, présente une densité inégale en fibres, à savoir qu'il recèle des zones où la quantité de fibres est trop faible ou trop importante. Ceci ne permet pas de conférer aux matériaux composites les propriétés requises.

Il a été proposé, par US-A-3,712,776, un procédé de traitement de fibres de verre, dans lequel ces dernières sont mélangées à une résine thermoplastique, dans un dispositif de malaxage. Le mélange ainsi obtenu est ensuite dirigé, via un dispositif d'alimentation, vers une extrudeuse. Le produit correspondant est ensuite acheminé vers un bain, puis se trouve transformé en granulés, par l'intermédiaire d'un dispositif de coupe.

On a également proposé, par EP-A-0 610 619, un procédé de fabrication de granulés par extrusion, dans lequel on mélange des composés thermoplastiques à des fibres de cellulose.

US-A-5,028,266 décrit un granulat permettant l'introduction d'un matériau de remplissage fibreux à l'intérieur d'une masse de bitume liquide.

PATENT ABSTRACTS OF JAPAN vol. 1998, n° 06, 30 avril 1998 (1998-04-30) & JP 10 053451 A (SEKISUI CHEM CO LTD ; U G KIZAI KK), 24 février 1998 (1998-02-24) a pour objet le traitement de déchets industriels contenant des fibres de verre.

DATABASE WPI Section Ch, Week 199616 Derwent Puiblications Ltd., London, GB ; Class A26, AN 1996-157342 XP002148819 & JP 08 041442 A (WATANABE S), 13 février 1996 (1996-02-13) divulgue le moulage d'une composition formée d'un mélange de sable, de granules de céramique, de granules résineuses renforcées de fibres, de coquilles d'oeuf, d'un matériau de type caoutchouc et d'une résine de type silicone.

L'invention vise à améliorer l'enseignement de US-A-3,712,776, état de la technique le plus proche, en se proposant de mettre en oeuvre un procédé de traitement de fibres qui, tout en garantissant une résistance satisfaisante aux éléments de charge ainsi obtenus, soit avantageux en termes écologiques et économiques.

A cet effet, elle a pour objet un procédé selon le libellé de la revendication 1.

On entend par additif neutre vis-à-vis des fibres, un additif n'induisant aucune modification substantielle des propriétés du matériau composite chargé au moyen de ces fibres.

On amène l'additif initialement solide dans un état fluide, à savoir dans lequel cet additif, qui peut présenter une haute viscosité, est malléable, de manière à permettre un malaxage intime avec les fibres.

L'invention permet d'atteindre les objectifs précédemment mentionnés.

Les éléments discrets obtenus conformément à l'invention sont aisément manipulables et présentent une taille réduite. Ces éléments discrets sont d'un dosage facile, dans la mesure où un opérateur est à même de les disperser de façon homogène, notamment au sein d'un béton ou de bitumes que ces fibres doivent renforcer.

Il convient de noter qu'au sein d'un élément discret isolé, la densité de fibres peut être sensiblement différente de la teneur nominale en fibres du matériau composite une fois réalisé, sans que cela soit préjudiciable aux propriétés de ce dernier. En effet, ces éléments discrets sont formés à partir d'un semi-produit où les fibres sont réparties de façon homogène.

L'utilisation de ces éléments discrets, qui sont à l'état solide, ne génère sensiblement aucune poussière, ce qui est avantageux en termes d'environnement et de conditions de travail pour un opérateur.

L'utilisation de fibres conditionnées sous forme d'éléments discrets obtenus conformément à l'invention, conduit à l'obtention de matériaux chargés de faible densité et dont la résistance mécanique est satisfaisante. De plus, le prix de revient de ces matériaux est peu élevé.

Le procédé de traitement conforme à l'invention assure un enrobage des fibres par l'additif en phase solide. Ceci confère à ces fibres, avant leur utilisation, une bonne tenue en milieu agressif.

Selon une caractéristique de l'invention, l'additif comprend une fraction substantielle de composés thermoplastiques. On pourra par exemple faire appel à des polyoléfines, à savoir des polyéthylènes ou polypropylènes, des composés styréniques, tels que l'acétate butadiène styrène, ou ABS, des polyamides, des polychlorures de vinyl, ou PVC, des polyalcools de vinyl, ou PVA, des polybutadiène theréphtalates, ou PBT, ou encore à des polyéthylène theréphtalates, ou PET.

Selon une caractéristique avantageuse de l'invention, l'additif est un polyéthylène basse densité. L'utilisation de ce dernier est avantageuse, dans la mesure où ce polyéthylène basse densité possède une température de fusion peu élevée et présente une grande fluidité, de sorte qu'il est à même d'entourer les fibres de façon satisfaisante. En outre, il possède une densité basse, ainsi qu'un coefficient de frottement avantageux. De plus, il a été constaté par la Demanderesse que, au contact de bétons ou de bitumes, il induit une répartition et une diffusion très satisfaisantes des éléments discrets, au sein de ce béton ou de ce bitume.

Selon une autre caractéristique de l'invention, on ajoute l'additif selon les proportions comprises entre 20 et 80%, de préférence entre 20 et 50% du poids total des éléments discrets une fois réalisés.

On peut répartir les fibres au sein de l'additif fluide par action thermo-mécanique, notamment par extrusion. On pourra cependant utiliser tout autre procédé approprié.

Un élément de charge pourra être associé à une matrice, de manière à former un matériau composite. Il pourra également être ajouté à des bétons ou encore à des bitumes, de manière à conférer à ces derniers des propriétés améliorées, en particulier en termes d'anti-fissuration.

Les fibres de renfort précitées sont avantageusement issues de l'industrie du recyclage. Elles possèdent, de façon avantageuse, une longueur supérieure à 10 mm, de préférence supérieure à 15 mm. Ces dimensions confèrent à l'élément de charge ainsi formé une résistance très satisfaisante, et induisent notamment une augmentation des caractéristiques mécaniques de base de cet élément.

L'élément de charge possède une dimension principale comprise entre 20 et 40 mm, de préférence entre 25 et 35 mm.

Selon une autre caractéristique avantageuse, cet élément de charge possède une dimension transversale comprise entre 3 et 7 mm, de préférence entre 4 et 6 mm.

Ces différentes dimensions confèrent à l'élément de charge une grande facilité de manipulation, ainsi que de stockage.

L'invention a enfin pour objet un bitume ou un béton composite, comprenant une matrice renforcée au moyen d'éléments de charge tels que définis ci-dessus.

L'invention va être décrite ci-dessous, en référence aux dessins annexés, donnés uniquement à titre d'exemples non limitatifs et dans lesquels :
- la figure 1 est un schéma de principe illustrant une installation de traitement de fibres conforme à l'invention;
- la figure 2 est une vue schématique de côté d'un élément discret obtenu conformément à la mise en oeuvre du procédé de l'invention.

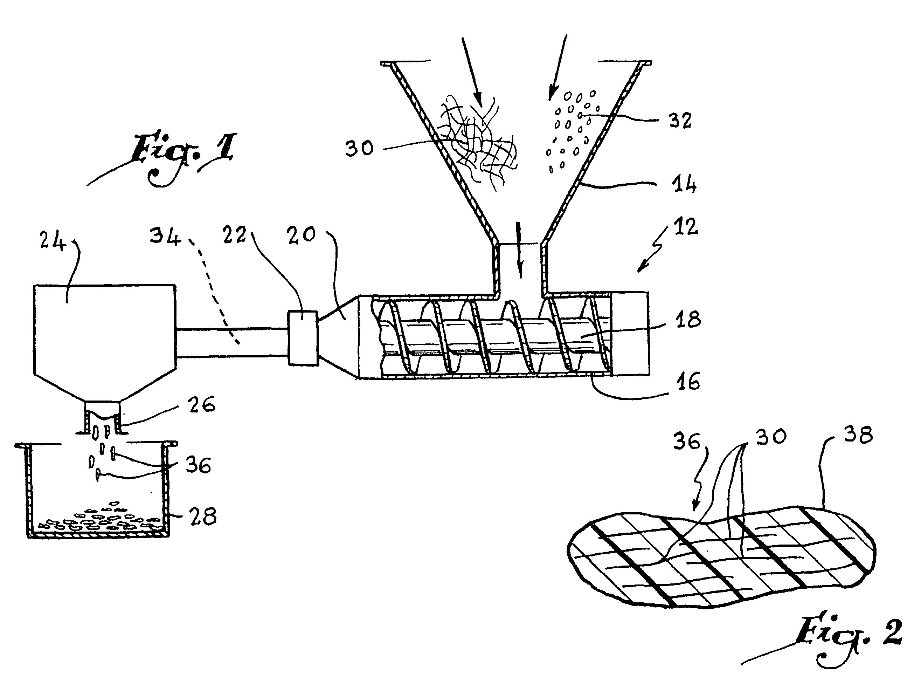

L'installation de traitement de fibres, illustrée à la figure 1, comprend une extrudeuse 12, de type classique.

Cette extrudeuse est pourvue d'une entrée 14 en forme d'entonnoir, d'un corps principal 16 dans lequel est reçue une vis sans fin 18, ainsi que d'une sortie 20 au voisinage de laquelle sont prévus des moyens de refroidissement 22.

La sortie 20 de l'extrudeuse 12 est mise en communication avec une unité de granulation 24, de type classique. La sortie 26 de cette unité de granulation 24 débouche dans un bac de conditionnement 28.

La mise en oeuvre du procédé de traitement de fibres conforme à l'invention va maintenant être décrite en référence à la figure 1.

On admet, à l'entrée 14 de l'extrudeuse 12, des fibres de verre 30 formant un agglomérat, ainsi que des granulés 32 de polyéthylène basse densité. Ces fibres 30 et ces granulés 32 sont introduits selon des proportions pondérales égales.

Ces fibres de verre sont obtenues, dans l'exemple considéré, par recyclage, suivant l'enseignement de FR-A-2 765 123. On peut également utiliser des fibres d'aramide, de carbone, végétales ou métalliques. On peut utiliser, en remplacement du polyéthylène basse densité, tout autre additif neutre vis-à-vis des fibres 30, tels que des composés thermo-plastiques.

Ces derniers peuvent être vierges ou être issus de l'industrie de recyclage, à savoir qu'ils sont alors formés par des morceaux de bouteilles, ou encore des déchets d'injection, ou des lambeaux d'objets initialement réalisés en matière thermo-plastique. Cette dernière mesure est avantageuse en termes écologiques, ainsi qu'économiques.

Dans le corps 16 de l'extrudeuse 12, les granulés 32 de l'additif polyéthylène basse densité passent de l'état solide à un état plastique, dans lequel ils sont aisément fluides. L'action de la vis sans fin 18 permet de répartir de façon homogène les fibres 30 au sein du polyéthylène, dans son état fluide.

Les moyens de refroidissement 22 assurent le retour du polyéthylène dans un état substantiellement solide. De la sorte, en aval de la sortie 26 de l'extrudeuse 12 est formé un boudin 34, constituant un semi-produit formé par le polyéthylène, revenu dans son état solide, et les fibres 30 qui sont réparties de manière homogène au sein de ce boudin 34. Ce dernier est alors admis dans l'unité de granulation 24, d'où il ressort sous forme de granulés, constituant des éléments discrets 36 qui se déversent dans le bac 28.

La figure 2 représente, de façon plus précise, un élément discret 36, obtenu selon le procédé tel que décrit ci-dessus. Cet élément discret 36 possède une forme allongée, à peu près cylindrique. Sa dimension principale, ou longueur, est par exemple de 30 mm, alors que sa dimension transversale, ou diamètre, est par exemple de 5 mm.

Cet élément 36 comprend un enrobage 38, formé du polyéthylène basse densité, au sein duquel sont noyées les fibres 30. Il est à noter que les fibres de s'étendent pas sur toute la longueur de l'élément discret 36 en forme de granulé.

Cet élément discret 36 constitue un élément de charge qui pourra être associé à une matrice, de manière à former un bitume ou un béton composite avec des propriétés améliorées, en particulier en termes d'anti-fissuration.

## Revendications

1. Procédé de traitement de fibres (30) destinées à la fabrication de matériaux composites, dans lequel
- on forme un agglomérat desdites fibres,
- on amène par chauffage (en 12), dans un état fluide, un additif (32) qui est solide à la température ambiante et neutre vis-à-vis des fibres,
- on ajoute (en 16) audit agglomérat ledit additif à l'état fluide,
- on répartit (par 18) de façon homogène les fibres (30) au sein de l'additif fluide,
- on fait revenir ledit additif à l'état solide, de manière à obtenir un semi-produit (34) formé par l'additif solide et les fibres (30), semi-produit au sein duquel la répartition des fibres est homogène,
- on débite (en 24) ledit semi-produit (34) sous forme d'éléments discrets (36),
**caractérisé en ce que** les fibres sont issues de l'industrie du recyclage et proviennent de matériaux composites, et **en ce qu'**on ajoute les éléments discrets (36), en tant qu'éléments de charge, à des bétons ou des bitumes, afin de former des bétons composites ou des bitumes composites.

2. Procédé suivant la revendication 1, **caractérisé en ce que** les fibres (30) possèdent une longueur supérieure à 10 mm, de préférence supérieure à 15 mm.

3. Procédé suivant l'une des revendications 1 ou 2, **caractérisé en ce que** l'additif (32) comprend une fraction substantielle de composés thermoplastiques.

4. Procédé suivant la revendication 3, **caractérisé en ce que** l'additif (32) est un polyéthylène basse densité.

5. Procédé suivant la revendication 3 ou 4, **caractérisé en ce que** l'additif (32) est issu de l'industrie du recyclage.

6. Procédé suivant l'une des revendications précédentes, **caractérisé en ce qu'**on ajoute l'additif (32) selon des proportions comprises entre 20 et 80%, de préférence entre 20 et 50%, du poids total des éléments discrets une fois réalisés.

7. Bitume composite ou béton composite obtenu par la mise en oeuvre du procédé selon l'une quelconque des revendications précédentes.

## Patentansprüche

1. Verfahren zur Behandlung von Fasern (30), die zur Herstellung von Verbundmaterialien bestimmt sind, wobei:
- ein Agglomerat der Fasern hergestellt wird,
- ein Additiv (32) mittels Erhitzen (in 12) in einen flüssigen Zustand überführt wird, das bei Umgebungstemperatur fest und gegenüber den Fasern neutral ist,
- das Additiv in flüssigem Zustand zu dem Agglomerat (in 16) zugegeben wird,
- die Fasern (30) (mittels 18) auf homogene Weise im Inneren des flüssigen Additivs verteilt werden,
- das Additiv in den festen Zustand zurücküberführt wird, um ein Halberzeugnis (34) zu erhalten, das durch das feste Additiv und die Fasern (30) gebildet wird, wobei im Inneren des Halberzeugnisses die Verteilung der Fasern homogen ist,
- das Halberzeugnis (34) (in 24) zu getrennten Elementen (36) zerschnitten wird,
**dadurch gekennzeichnet, dass** die Fasern aus der Recyclingindustrie stammen und von Verbundmaterialien herrühren und dass die getrennten Elemente (36) als Füllelemente zu Betons oder Bitumen zugegeben werden, um Verbundbetons oder Verbundbitumen herzustellen.

2. Verfahren nach Anspruch 1, **dadurch gekennzeichnet, dass** die Fasern (30) eine Länge von mehr als 10 mm, vorzugsweise mehr als 15 mm, besitzen.

3. Verfahren nach einem der Ansprüche 1 oder 2, **dadurch gekennzeichnet, dass** das Additiv (32) einen erheblichen Anteil an thermoplastischen Verbindungen umfasst.

4. Verfahren nach Anspruch 3, **dadurch gekennzeichnet, dass** das Additiv (32) ein Polyethylen niedriger Dichte ist.

5. Verfahren nach Anspruch 3 oder 4, **dadurch gekennzeichnet, dass** das Additiv (32) aus der Recyclingindustrie stammt.

6. Verfahren nach einem der vorstehenden Ansprüche, **dadurch gekennzeichnet, dass** das Additiv (32) in Anteilen zwischen 20 und 80%, vorzugsweise zwischen 20 und 50%, bezogen auf das Gesamtgewicht der einmal hergestellten getrennten Elemente, zugegeben wird.

7. Verbundbitumen oder Verbundbeton, welche(s/r) mittels Durchführung des Verfahrens nach einem der vorstehenden Ansprüche erhalten wird.

## Claims

1. Method of treating fibres (30) intended for the manufacture of composite materials, in which method:
- an agglomerate of said fibres is formed;
- an additive, which is solid at ambient temperature and neutral in relation to the fibres, is brought to a fluid state by heating (at 12);
- said additive, in the fluid state, is added (at 16) to said agglomerate;
- the fibres (30) are distributed (via 18) in a homogeneous manner within the fluid additive;
- said additive is returned to the solid state, so as to obtain a semi-product (34) formed by the solid additive and the fibres (30), a semi-product within which the distribution of the fibres is homogeneous; and
- said semi-product (34) is discharged (at 24) in the form of discrete elements (36),
**characterised in that** the fibres are products of the recycling industry and are derived from composite materials, and **in that** the discrete elements (36) are added, as charging elements, to concretes or bitumens, in order to form composite concretes or composite bitumens.

2. Method according to claim 1, **characterised in that** the fibres (30) have a length greater than 10 mm, preferably greater than 15 mm.

3. Method according to one of claims 1 or 2, **characterised in that** the additive (32) comprises a substantial fraction of thermoplastic compounds.

4. Method according to claim 3, **characterised in that** the additive (32) is a low-density polyethylene.

5. Method according to claim 3 or 4, **characterised in that** the additive (32) is a product of the recycling industry.

6. Method according to one of the preceding claims, **characterised in that** the additive (32) is added in proportions of between 20 and 80 %, preferably between 20 and 50 %, of the total weight of the discrete elements once produced.

7. Composite bitumen or composite concrete obtained by carrying out the method according to any of the preceding claims.
